# EUROPÄISCHE PATENTSCHRIFT

(11) **EP 0 952 183 B1**
(45) Veröffentlichungstag und Bekanntmachung des Hinweises auf die Patenterteilung: **23.02.2005**
(21) Anmeldenummer: 99106256.3
(22) Anmeldetag: 14.04.1999
(51) Int. Cl.: C08K 5/3415, C09B 67/00, C09B 57/00, C07D 487/04

(54) **Verzugsfreie Pigmentzusammensetzungen enthaltend Diaryl-diketopyrrolo 3,4c pyrrole**
Warp free pigment compositions containing diaryl-diketopyrrolo 3,4c pyrroles
Compositions de pigments contenant des dicétopyrrolo 3,4c pyrroles de diaryl exemptes de courbure

(30) Priorität: 22.04.1998 CH 0091598; 02.03.1999 CH 0038099
(43) Veröffentlichungstag der Anmeldung: 27.10.1999
(73) Patentinhaber: Ciba Specialty Chemicals Holding Inc., 4057 Basel (CH)
(72) Erfinder: Flandrin, Franck Rey, 67000 Strasbourg (FR); Hu, Guo-Hua, 54001 Nancy Cedex (FR); Bugnon, Philippe, 1724 Essert (CH); Hao, Zhimin, 4125 Riehen (CH)

(56) Entgegenhaltungen:
- EP-A- 0 133 156
- EP-A- 0 748 851
- EP-A- 0 764 696
- GB-A- 2 255 565

## Beschreibung

Die Erfindung betrifft die Verwendung bestimmter Diaryl-diketopyrrolo[3,4c]pyrrol-derivate als Zusätze bei der Pigmentierung teilkristalliner Kunststoffe, insbesondere solcher, die im Spritzgussverfahren verarbeitet werden. Dadurch kann der Verzug vermieden werden.

In der kunststoffverarbeitende Industrie ist Verzug nach dem Spritzguss ein bekanntes, grosses Problem, das bei teilkristallinen Kunststoffen ganz speziell in Anwesenheit organischer Pigmente beobachtet wird. Es wird allgemein angenommen, dass die Hauptursache dafür ein Nukleierungseffekt ist, der von den organischen Pigmentteilchen ausgeht.

Es wurden bereits mit meist bescheidenem Erfolg viele Versuche unternommen, dieses Problem zu lösen, zum Beispiel durch Verlangsamung des Spritzgussverfahrens, durch Änderung der Pigmentstruktur oder -Morphologie, durch Umhüllung der Pigmentteilchen oder durch Zumischung von Zusätzen.

Die Änderung der Spritzgussparameter ist umständlich, unökonomisch und stark von der Geometrie und Grösse des herzustellenden Gegenstandes abhängig. Bei jeder Änderung der Pigmentierung müssen zudem die Parameter mühsam angepasst werden.

Die Morphologie der Pigmentpartikel kann durch bekannte Methoden verändert werden, zum Beispiel indem nadelförmige Pigmente (dazu gehören insbesondere Phthalocyanine) gemahlen werden oder mittels Überführung in eine andere Kristallmodifikation oder eine gröbere Form. Die koloristischen Eigenschaften der Pigmente werden jedoch durch die Änderung deren Morphologie unerwünscht verändert. JP 04/372632 schlägt zum Beispiel Diphenyl-diketopyrrolo[3,4c]pyrrole mit einer spezifischen Oberfläche von 3-15 m²/g vor, welche sehr farbschwach sind.

EP-498667 beschreibt mit Polyalkylenoxy-Gruppen substituierte Farbstoffe, welche anstelle von Pigmenten verwendet werden können. Der Verzug wird jedoch ungenügend verbessert, und diese Farbstoffe weisen unbefriedigende Echtheiten auf. Dasselbe trifft auch für die aus JP-53/121845 bekannten, mit Pentyloxy substituierten Phthalocyanine zu.

US-4,233,206 beschreibt eine Methode zur Einfärbung von Polyolefinartikeln, worin mit langkettigen Säuren veresterte Methylol-substituierte Pigmente verwendet werden. Jedoch leiden die Pigmenteigenschaften, beispielsweise die Migration, insbesondere bei Pigment klassen, deren guten Eigenschaften auf die Anwesenheit von primären oder sekundären Amidgruppen beruht, welche bei dieser Methode jedoch mit Methylol substituiert werden und somit verschwinden. Ferner müssen diese Farbstoffe in Kombination mit normalen Pigmenten entweder in hohen Konzentrationen zugegeben werden, oder aber durch und durch mit dem Pigment innig vermengt werden. Diese Methode liefert zudem bei Pigmenten mit besonders starker Tendenz zum Verzug, zum Beispiel bei Diketopyrrolo[3,4c]pyrrolen, unbefriediegende Resultate.

Wie in Chimia 48/9, 436 [1994] beschrieben, besteht daher die bisher beste Methode darin, das Pigment mit einem Überzug aus einem Polymer zu versehen. Mit dieser Methode ist jedoch keine ganz verzugsfreie Pigmentierung möglich, da es beim Dispergieren immer bei einem Teil der Aggregate zu Bruchflächen kommt, welche als Nukleierungskeime wirken.

Letztlich ist bekannt, dass man dem Kunststoff Verstärkungsmittel zusetzen kann, zum Beispiel Glasfaser oder Polyamide wie in JP-57/159831 und WO-98/41570 offenbart. Dadurch werden aber die Materialeigenschaften meistens unerwünscht grundlegend verändert. Je nach zu stärkendem Material kommt es zu Kompatibilitätsprobleme, und die Materialien sind nicht mehr in gewünschtem Masse rezyklisierbar.

Die Aufgabe bestand daher darin, ein Verfahren zu finden, womit teilkristalline Kunststoffe im Spritzgussverfahren auch mit stark verzugsfördernden Pigmenten, ganz speziell mit Colour Index Pigment Red 254 und Analoga, ohne Änderung ihrer mechanischen und chemischen Eigenschaften pigmentiert werden können.

Aus EP-511165 sind Diketopyrrolo[3,4c]pyrrolverbindungen mit an Alkoxy- oder Polyalkylenoxyketten gebundenen N-haltigen Gruppen bekannt, welche in Lacksystemen und in Druckfarben hervorragende rheologische Eigenschaften aufweisen.

Aus EP-133156 sind Diketopyrrolo[3,4c]pyrrole bekannt, welche sich zum Färben von hochmolekularem organischem Material eignen, wobei unter anderem zum Beispiel auch Polyolefine genannt sind. Darunter ist als einer von zwei Beispielen am N monosubstituierter Verbindungen 1,4-Diketo-2-n-butyl-5-hydro-3,6-diphenyl-pyrrolo[3,4c]pyrrol offenbart, welches sich als Polyesterfarbstoff mit nur gerade ausreichender Lichtechtheit eignet.

US 4,579,949 und US 4,490,542 offenbaren unter vielen anderen Verbindungen auch mit Alkoxy oder Alkylthio substituierte Diketopyrrolo[3,4c]pyrrole, jedoch ohne konkreten Beispiele. Auch in diesem Fall sind unter den vielen Kunststoffen Polyolefine genannt.

Die obengenannte Aufgabe konnte überraschend effektiv durch die Verwendung der erfindungsgemässen Farbmittelkombinationen gelöst werden. Die Dimensionsstabilität ist in erstaunlichem Masse besser, als bei Verwendung der bisher bekannten Pigmentierungen, wobei die pigmentären Eigenschaften der Hauptkomponente im wesentlichen erhalten bleiben; in sehr vielen Fällen ist der Verzug sogar gänzlich verschwunden.

Die Erfindung betrifft eine Zusammensetzung enthaltend
- ein Pigment enthaltend mindestens je eine Gruppe 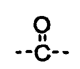 und 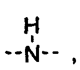 welche miteinander als 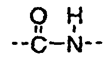 gebunden oder zusammen in Konjugation stehen, und
- ein Farbmittel der Formel 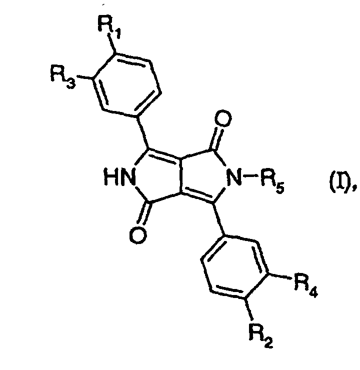
worin
R₁, R₂, R₃ und R₄ unabhängig voneinander für Wasserstoff, Halogen, R₆, OR₆ oder SR₆ stehen, R₅ Wasserstoff oder lineares oder verzweigtes C₁-C₁₂Alkyl, Benzyl oder Phenethyl ist, und R₆ eine unsubstituierte oder einfach oder mehrfach mit Halogen oder mit OC₁-C₆Alkyl substituierte apolare Gruppe ist, mit der Massgabe, dass wenn R₅ Wasserstoff ist, R₁, R₂, R₃ oder R₄ für R₆, OR₆ oder SR₆ steht.

Wenn R₅ Wasserstoff ist, stehen bevorzugt mindestens zwei von R₁, R₂, R₃ und R₄ für R₆, OR₆ oder SR₆. Bevorzugt sind Farbmittel der Formel (I), worin R₁ und R₂ für OR₆ oder SR₆ stehen und R₃ und R₄ gleich Wasserstoff sind, oder worin R₁ und R₂ gleich Wasserstoff sind und R₃ und R₄ für OR₆ oder SR₆ stehen. Besonders bevorzugt sind Farbmittel der Formel (I), worin R₁ und R₂ für SR₆ stehen und R₃ und R₄ gleich Wasserstoff sind, oder worin R₁ und R₂ gleich Wasserstoff sind und R₃ und R₄ für SR₆ stehen. Diese eignen sich insbesondere gut in Kombination mit Diketopyrrolo[3,4c]pyrrolen, auch dann, wenn R₅ gleich Wasserstoff ist.

R₅ ist bevorzugt C₁-C₁₂Alkyl oder Benzyl, besonders bevorzugt lineares C₁-C₁₂Alkyl. R₆ ist zum Beispiel ein apolarer gesättigter, ein- oder mehrfach ungesättigter oder aromatischer, substituierter oder unsubstituierter Kohlenwasserstoffrest, bevorzugt unsubstituiertes oder mit Halogen oder OC₁-C₆Alkyl substituiertes, lineares oder verzweigtes C₁-C₃₀Alkyl, oder C₂-C₃₀Alkenyl. Besonders bevorzugt ist R₆ unsubstituiertes, lineares C₁-C₃₀Alkyl.

Bei C₁-C₃₀Alkyl handelt es sich beispielsweise um Methyl, Ethyl, n-Propyl, Isopropyl, n-Butyl, sec.-Butyl, tert.-Butyl, n-Amyl, tert.-Amyl, Hexyl, Heptyl, Octyl, 2-Ethylhexyl, Nonyl, Decyl, Dodecyl, Tetradecyl, Hexadecyl, Octadecyl, Tetracosyl oder Triacontyl. Halogen ist zum Beispiel Jod, Fluor, Brom, oder bevorzugt Chlor.

Für optimale Resultate können R₁, R₂, R₃ und R₄ auf R₅ abgestimmt werden (oder auch umgekehrt). Ist R₅ gleich C₅-C₁₂Alkyl, Benzyl oder Phenethyl, so sind R₁, R₂, R₃ oder R₄ beliebig und können beispielsweise alle gleichzeitig Wasserstoff sein. Wenn R₅ gleich C₂-C₄Alkyl ist, sind bevorzugt mindestens 6 C-Atome insgesamt in R₁, R₂, R₃, R₄ und R₅ enthalten. Wenn R₅ gleich Methyl ist, ist bevorzugt eine zumindest 6 C-Atome lange Alkyloder Alkylenkette in R₁, R₂, R₃ oder R₄ enthalten. Wenn R₅ gleich Wasserstoff ist, sind bevorzugt zwei zumindest 6 Atome langen Alkyl- oder Alkylenketten oder eine zumindest 12 C-Atome lange Alkyl- oder Alkylenkette in R₁, R₂, R₃ oder R₄ enthalten. Eine höhere Anzahl C-Atome, beziehungsweise längere Alkyl- oder Alkylenketten, sind meist vorteilhaft.

Die bevorzugten minimalen Kettenlängen der Substituenten am Stickstoff und an den Phenylringen lässt einen Zusammenhang mit der Polarität vermuten, der sich zum Beispiel auf die Löslichkeit und den Schmelzpunkt auswirken könnte. Jedenfalls überraschend ist, dass die Abwesenheit von polaren oder Wasserstoffbrücken-bildende Gruppen in den Ketten, wie N-Atome oder Carbonylgruppen, ganz wesentlich zur Erreichung des gewünschten Effektes ist. Von essentieller Bedeutung ist andererseits ebenfalls überraschend, dass in Formel (I) mindestens ein Amid-Proton vorhanden sein soll.

Bevorzugt weist das Pigment mindestens je zwei Gruppen 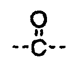 und 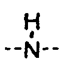 auf, wie zum Beispiel in Chinacridon-, Disazokondensations-, Isoindolinon- oder 1,4-Diketo-2,5-dihydro-3,6-diaryl-pyrrolo[3,4c]pyrrol-pigmenten, oder auch in Pigment Yellow 139 oder Pigment Violet 37.

Besonders bevorzugt handelt es sich beim Pigment um ein 1,4-Diketo-2,5-dihydro-3,6-diarylpyrrolo[3,4c]pyrrol-pigment, insbesondere um ein Pigment der Formel 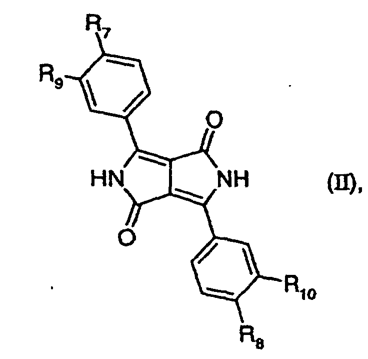 worin
R₇, R₈, R₉ und R₁₀ unabhängig voneinander für Wasserstoff, Halogen, Cyano, Carbamoyl, C₁-C₄Alkyl oder Phenyl stehen.

Ganz besonders bevorzugt sind Pigmente der Formel (II), worin R₇ und R₈ für Wasserstoff, Chlor oder C₁-C₄Alkyl, und R₉ und R₁₀ für Wasserstoff, C₁-C₄Alkyl, Cyano oder Carbamoyl stehen. Bei C₁-C₄Alkyl haben Methyl und tert.-Butyl eine besondere Bedeutung.

Bezogen auf ein Gewichtsteil Pigment beträgt die Menge des Farbmittels der Formel (I) bevorzugt von 0,001 bis 9 Gewichtsteile, besonders bevorzugt von 0,01 bis 1 Gewichtsteile, ganz besonders bevorzugt bis 0,2 Gewichtsteile, insbesondere bis 0,1 Gewichtsteile.

Bevorzugt weist das Pigment eine spezifische Oberfläche von mehr als 15 m²/g auf, beispielsweise von 16 bis 150 m²/g. Besonders bevorzugt weist das Pigment eine spezifische Oberfläche von mindestens 18 m²/g auf, zum Beispiel von 18 bis 50 m²/g für ein deckendes Pigment, oder von 50 bis 100 m²/g für ein transparentes Pigment.

Die erfindungsgemässen Zusammensetzungen können mehrere Pigmente mit Gruppen 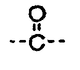 und 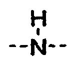 und/oder mehrere Farbmittel der Formel (I) und/oder auch zusätzliche Bestandteile enthalten, zum Beispiel übliche Zusätze oder weitere Farbmittel, wie anorganische Weiss-, Schwarz- oder Buntpigmente und/oder andere organische Buntpigmente. Insbesondere können die erfindungsgemässen Zusammensetzungen auch Verbindungen der Formel 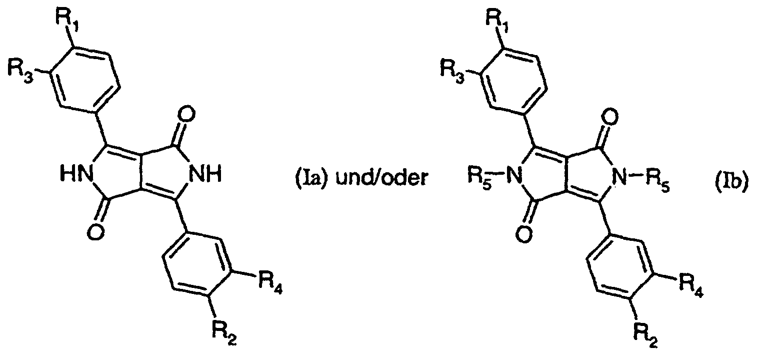 enthalten. (Ib) entsteht oft neben (I) bei der Alkylierung von (Ia), so dass (I), (Ia) und (Ib) als Gemische vorliegen, welche vorteilhaft ebenfalls effizient anstatt von reinem (I) verwendet werden können, wobei lediglich deren Gesamtmenge auf die gewünschte Menge (I) gemäss Gehalt an (I) im Gemisch zu berechnen ist.

Die Erfindung betrifft deshalb auch eine Farbmittelzusammensetzung, bestehend im wesentlichen aus
- einem oder mehreren Pigmenten enthaltend mindestens je eine Gruppe 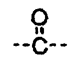 und 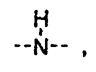 welche miteinander als 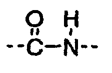 gebunden oder zusammen in Konjugation stehen,
- einem oder mehreren Farbmitteln der Formel (I), und
- gegebenenfalls einem oder mehreren Farbmitteln, ausgewählt aus der Gruppe bestehend aus anorganischen Weiss-, Schwarz- oder Buntpigmenten, weiteren organischen Buntpigmenten und Verbindungen der Formel 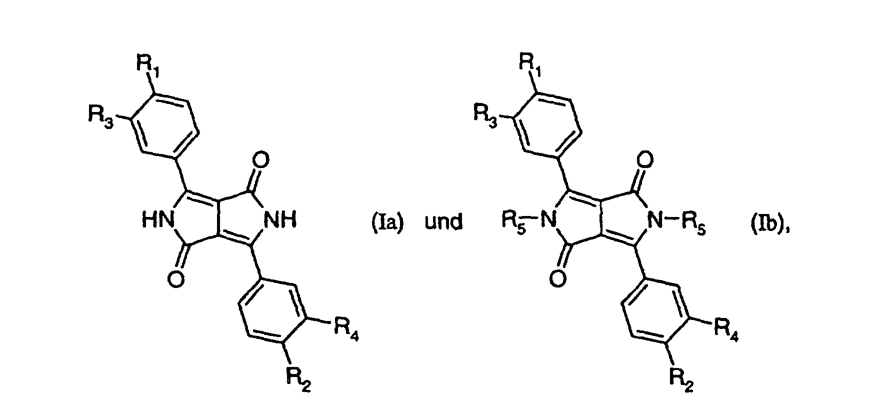
worin R₁, R₂, R₃, R₄ und R₅ die gleiche Bedeutung haben, wie in Formel (I), mit derselben Massgabe.

Als weitere organische Buntpigmente sind solche zu verstehen, welche keine miteinander als 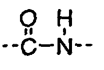 gebundenen oder zusammen in Konjugation stehenden Gruppen 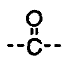 und 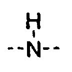 enthalten.

Diese Farbmittelzusammensetzung kann auch mit einem organischen Material vermischt, oder diesem einverleibt sein, zum Beispiel als gebrauchsfertiges Gemisch oder als Masterbatch. Die Konzentration der erfindungsgemässen Farbmittelzusammensetzung beträgt vorzugsweise von 0,01 bis 70 Gew.-%, bevorzugt von 0,08 bis 40 Gew.-%, besonders bevorzugt von 0,1 bis 10 Gew.-%, bezogen auf das Gesamtgewicht der erfindungsgemässen Farbmittelzusammensetzung und des organischen Materials.

Beim organischen Material kann es sich um einen teilkristallinen Kunststoff handeln, oder aber insbesondere bei Masterbatches auch um andere, übliche Einbettungsmaterialien, zum Beispiel um amorphe Kunststoffe, wie LLDPE (lineares Polyethylen niedriger Dichte), um Wachse, um andere Zusatzstoffe, wie Stabilisatoren, oder um Gemische davon. In Masterbatches beträgt die Konzentration der erfindungsgemässen Farbmittelzusammensetzung vorzugsweise von 5 bis 70 Gew.-%, bezogen auf das Gesamtgewicht des Masterbatch.

Unter "teilkristalline Kunststoffe" welden solche verstanden, welche bei der Erstarrung kleine kristalline Kerne oder Aggregate (zum Beispiel Sphärulite oder Quadrite) bilden, inklusive solche, welche dies nur in Gegenwart von Nukleierungsmitteln (zum Beispiel organischen Pigmenten) tun.

Teilkristalline Kunststoffe sind im allgemeinen thermoplastische hochmolekulare organische Materialien mit einem Molekulargewicht (M_{w}) von 10⁴ bis 10⁸, bevorzugt von 10⁵ bis 10⁷, und einem Kristallinitätsgrad (X_{c}) von 10 bis 99,9%, bevorzugt von 40 bis 99%, besonders bevorzugt von 80% bis 99%. Bevorzugte teilkristalline Kunststoffe sind Homopolymere, Block- oder statistische Copolymere und Terpolymere von Ethylen, Propylen, Butylen, Styrol und/oder Divinylbenzol, insbesondere α-Oleflne wie HDPE, LDPE, Polypropylen und Polystyrol, sowie auch Polyester, wie PET, Polyamide, wie Nylon 6 und Nylon 66, und thermoplastische lonomere.

Besonders bevorzugte teilkristalline Kunststoffe sind Polyolefine, insbesondere Polyethylen hoher Dichte und Polypropylen.

Die teilkristallinen Kunststoffe können gegebenenfalls auch Additive in üblichen Mengen enthalten, zum Beispiel Stabilisatoren, optische Aufheller, Füll- und/oder Gleitmittel.

Die Erfindung betrifft daher auch eine Zusammensetzung, bestehend im wesentlichen aus einem teilkristallinen Kunststoff und einer erfindungsgemässen Zusammensetzung.

Die Herstellung erfolgt nach den üblichen Verfahren, beispielsweise durch Mischen der Pigmente und Verbindungen der Formel (I) oder deren Gemisches (ohne die Farbmittel notwendigerweise vorher in ein Präparat zu überführen) mit dem Kunststoffgranulat oder -pulver, und Extrudieren der Mischung zu Fasern, Folien oder Granulaten. Letztere können dann beispielsweise im Spritzgussverfahren zu Gegenständen verformt werden, wobei diese Gegenstände beim Erstarren kaum oder in vielen Fällen sogar überhaupt keinen Verzug aufweisen.

In einer ganz besonderen Ausführungsform der Erfindung kann man alternativ auch die Verbindungen der Formel (I) in situ herstellen, indem ein Diketopyrrolo[3,4c]pyrrol-pigment nur partiell umgesetzt wird. Reaktionen, die in Gegenwart des Reaktanden im Unterschuss nur partiell an der Oberfläche des Pigments ablaufen, sind beispielsweise die Alkylierung durch eine Gruppe R₅ am Stickstoff und die nukleophile Substitution von Verbindungen der Formel (I), worin ein oder mehrere R₁ bis R₄ für Halogen stehen, durch Alkoxylat oder insbesondere durch Alkylthiolat.

Je nach deren Löslichkeit im verwendeten Lösungsmittel kann die gebildete Verbindung der Formel (I) aus der Lösungsphase isoliert werden, oder es entstehen physikalische Gemische des Pigments und der Verbindung der Formel (I), zum Beispiel als Festkörpergemische oder Agglomerate. Mit der Wahl eines Lösungsmittels, worin die Verbindung der Formel (I) schwerlöslich ist, können sogar Partikel erhalten werden, welche aus einem Pigmentkem und einem darüber angebrachten Belag aus der Verbindung der Formel (I) bestehen.

Obwohl letztere Kompositstruktur nicht notwendig ist und möglicherweise beim Spritzguss verändert oder sogar zerstört wird, kann sie selbstverständlich anstatt von gewöhnlichen physikalischen Gemischen erfindungsgemäss verwendet werden, wobei die Resultate ebenfalls ausgezeichnet sind.

Die Erfindung betrifft daher auch ein Verfahren zur Färbung von teilkristallinen Kunststoffen in der Masse, dadurch gekennzeichnet, dass
- ein Pigment enthaltend mindestens je eine Gruppe 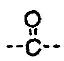 und 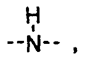 welche miteinander als 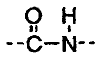 gebunden oder zusammen in Konjugation stehen, und
- ein Farbmittel der Formel 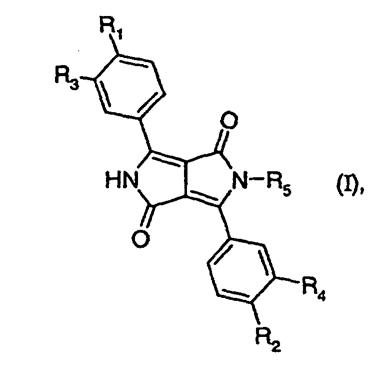 worin
   R₁, R₂, R₃ und R₄ unabhängig voneinander für Wasserstoff, Halogen, R₆, OR₆ oder SR₆ stehen, R₅ Wasserstoff oder lineares oder verzweigtes C₁-C₁₂Alkyl, Benzyl oder Phenethyl ist, und R₆ eine unsubstituierte oder einfach oder mehrfach mit Halogen oder mit OC₁-C₆Alkyl substituierte apolare Gruppe ist, mit der Massgabe, dass wenn R₅ Wasserstoff ist, R₁, R₂, R₃ oder R₄ für R₆, OR₆ oder SR₆ steht,
verwendet werden.

Die Erfindung betrifft auch ein Verfahren zur Herstellung von in der Masse gefärbten Kunststoffen, dadurch gekennzeichnet, dass
- ein teilkristalliner Kunststoff,
- ein Pigment enthaltend mindestens je eine Gruppe 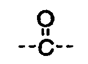 und 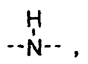 welche miteinander als 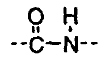 gebunden oder zusammen in Konjugation stehen, und
- ein Farbmittel der Formel 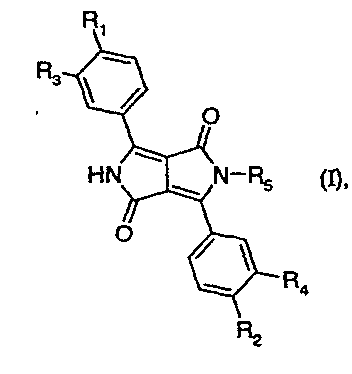 worin
   R₁, R₂, R₃ und R₄ unabhängig voneinander für Wasserstoff, Halogen, R₆, OR₆ oder SR₆ stehen, R₅ Wasserstoff oder lineares oder verzweigtes C₁-C₁₂Alkyl, Benzyl oder Phenethyl ist, und R₆ eine unsubstituierte oder einfach oder mehrfach mit Halogen oder mit OC₁-C₆Alkyl substituierte apolare Gruppe ist, mit der Massgabe, dass wenn R₅ Wasserstoff ist, R₁, R₂, R₃ oder R₄ für R₆, OR₆ oder SR₆ steht,
im Spritzgussverfahren geformt werden.

Gegebenenfalls können selbstverständlich auch Additive in üblicher Art und Weise als weitere Zusätze verwendet werden.

Die Bestandteile der Spritzgussformulierung können der Spritzgussmaschine bereits vorgemischt, oder auch einzeln gleichzeitig zudosiert werden. Vorteilhaft ist, dass das Vormischen gegebenenfalls mit üblichen einfachen Mitteln erfolgen kann, da die Komponenten nicht unbedingt innig vermengt werden müssen. Es ist auch möglich, zwei oder mehr Komponenten vorzumischen, und dann deren Gemisch zusammen mit anderen, einzeln oder ebenfalls vorgemischten Komponenten zuzudosieren. Insbesondere kann man Masterbatches verwenden, wobei beispielsweise ein farbloses Kunststoffgranulat, ein pigmentiertes Kunststoffgranulat und ein mit einer Verbindung der Formel (I) gefärbtes Granulat, gegebenenfalls mitsamt oder zuzüglich Additive, gleichzeitig der Spritzgussmaschine zudosiert werden können. Der Fachmann wird sofort erkennen, wie aus diesem ganz überraschenden Vorteil der Erfindung erhebliche Produktivitätsgewinne möglich sind.

Die erfindungsgemässen Zusammensetzungen können selbstverständlich auch zur Einfärbung anderer hochmolekularer organischer Materialien in der Masse verwendet werden, zum Beispiel anderer Kunstoffe, Lacke oder Druckfarben.

Die Verbindungen der Formel (I) sind teilweise bekannt. Die restlichen Verbindungen können in enger Analogie zu den bekannten Verbindungen hergestellt werden.

Einige Verbindungen der Formel (I) sind neu. Die Erfindung betrifft deshalb auch eine Verbindung der Formel 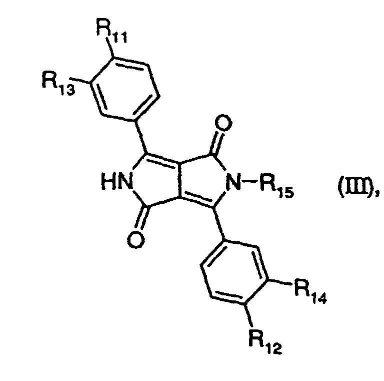 worin
R₁₁, R₁₂, R₁₃ und R₁₄ unabhängig voneinander für Wasserstoff, Halogen, R₁₆, OR₁₆ oder SR₁₆ stehen, R₁₅ lineares oder verzweigtes C₁-C₁₂Alkyl, Benzyl oder Phenethyl ist, und R₁₆ eine unsubstituierte oder mit Halogen oder mit OC₁-C₆Alkyl substituierte apolare Gruppe ist, dadurch gekennzeichnet, dass zumindest eins von R₁₁, R₁₂, R₁₃ oder R₁₄ für R₁₆, OR₁₆ oder SR₁₆ steht. Die Verbindungen der Formel (III) sind als Farbmittel verwendbar.

Die nachfolgenden Beispiele erläutern die Erfindung, ohne deren Umfang einzuschränken (wo nicht anders angegeben, handelt es sich bei "%" immer um Gewichts-%):
Beispiele 1-3: 1,4 g Irgazin® DPP Red BO (Colour Index Pigment Rot 254 / Ciba Specialty Chemicals Inc.; 19 ± 1 m²/g), die in der folgenden Tabelle angegebene Menge einer Verbindung der Formel (I) und 700 g Stamilan® 9089U (HDPE /DSM) werden in einem Taumelmischer während 10 Minuten trocken vermischt. Die Mischung wird in einem Einschneckenextruder bei 200°C extrudiert. Das so erhaltene Granulat wird auf einer Spritzgussmaschine bei 240°C zu Platten der Dimensionen 174x49x2,5 mm verarbeitet. Nach dem Verspritzen werden die Platten 30 Minuten bei 90°C im Wasserbad temperiert und mindestens 15 Stunden bei Raumtemperatur (∼23°C) gelagert. Ausschliessend werden die Platten genau vermessen. 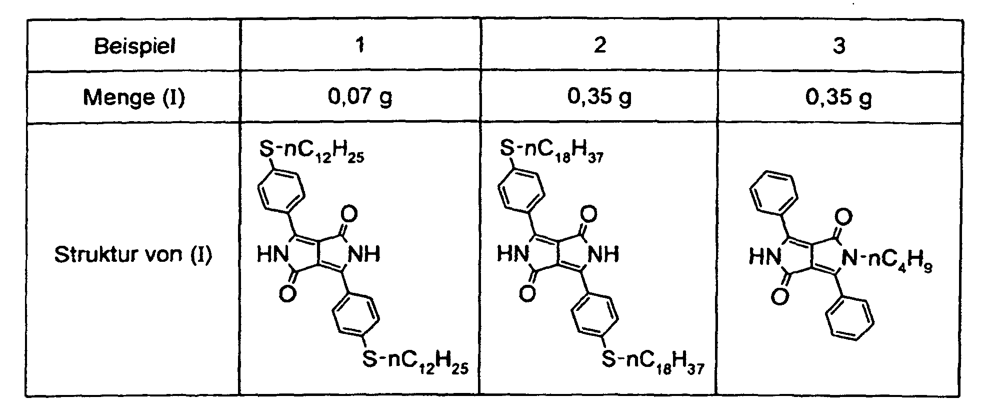
   In allen Fällen bekommt man identische Resultate, wie mit farblosem Stamilan® 9089U. Die erhaltenen Plättchen sind im Gegensatz zu solchen mit Irgazin® DPP Red BO allein nahezu völlig verzugsfrei.
Beispiele 4-6: Man verfährt analog Beispiel 1, verwendet jedoch jeweils 0,015 g, 0,03 g oder 0,04 g der Verbindung der Formel (I), ebenfalls mit ausgezeichneten Resultate.
Beispiele 7-9: Man verfährt analog Beispiel 2, verwendet jedoch jeweils 0,015 g, 0,03 g oder 0,04 g der Verbindung der Formel (I), ebenfalls mit ausgezeichneten Resultate.
Beispiele 10-12: Man verfährt analog den Beispielen 1-3, verwendet jedoch als Pigment 1,4-Diketo-2,5-dihydro-3,6-di-(p-tert.-butyl-phenyl)-pyrrolo[3,4c]pyrrol anstatt von 1,4-Diketo-2,5-dihydro-3,6-di-(p-chlor-phenyl)-pyrrolo[3,4c]pyrrol, ebenfalls mit ausgezeichneten Resultate.
Beispiele 13-14: Man verfährt analog den Beispielen 5-6, verwendet jedoch als Pigment Colour Index Pigment Gelb 109 anstatt von 1,4-Diketo-2,5-dihydro-3,6-di-(p-chlor-phenyl)-pyrrolo[3,4c]pyrrol, ebenfalls mit guten Resultate.
Beispiele 15-16: Man verfährt analog den Beispielen 13-14, verwendet jedoch Colour Index Pigment Gelb 110 anstatt von Pigment Gelb 109. Die Resultate sind vergleichbar.
Beispiel 17: 5 g Colour Index Pigment Gelb 110 werden mit 0,55 g der Verbindung der Formel (I) gemäss Beispiel 1 in 100 ml Wasser und 25 ml Isopropanol während 4 Stunden dispergiert. Das Produkt wird dann abfiltriert, mit Wasser gewaschen und bei 80°C / 3000 Pa getrocknet. Das erhaltene Produkt wird dann wie im Beispiel 1 mit Polyethylen im Spritzguss verarbeitet. Die erhaltenen Plättchen zeigen kaum Verzug.
Beispiel 18: Man verfährt analog Beispiel 17, verwendet jedoch Pigment Gelb 109 anstatt von Pigment Gelb 110. Die Resultate sind vergleichbar.
Beispiele 19-21: Man verfährt analog den Beispielen 1-3, verwendet jedoch Colour Index Pigment Blau 15:1 anstatt von 1,4-Diketo-2,5-dihydro-3,6-di-(p-chlor-phenyl)-pyrrolo[3,4c]-pyrrol, ebenfalls mit guten Resultate.
Beispiele 22-24: Man verfährt analog den Beispielen 1-3, verwendet jedoch Colour Index Pigment Blue 15:2 anstatt von 1,4-Diketo-2,5-dihydro-3,6-di-(p-chlor-phenyl)-pyrrolo[3,4c]-pyrrol, ebenfalls mit guten Resultate.
Beispiele 25-26: 1 mol 1,4-Diketo-2-n-butyl-5-hydro-3,6-di-(4'-chlorphenyl)-pyrrolo[3,4c]-pyrrol, beziehungsweise 1 mol 1,4-Diketo-2-methyl-5-hydro-3,6-di-(4'-chlorphenyl)-pyrrolo[3,4c]pyrrol, wird mit 2 mol Kalium-n-dodecylthiolat in 1 l Dimethylacetamid während 5 Std bei 130°C umgesetzt. Man bekommt die Produkte folgender Strukturen: 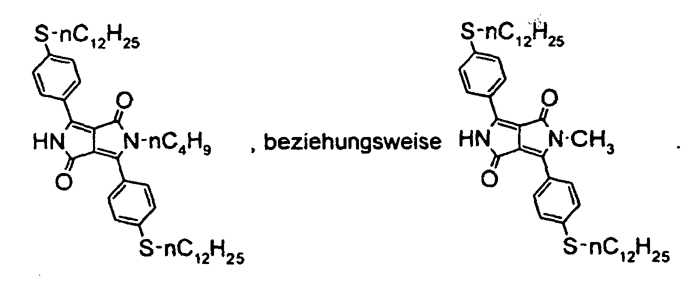 Analog den vorangegangenen Beispielen verwendet, ergeben auch diese Verbindungen der Formel (I) gute Resultate.
Beispiel 27: Man verfährt analog Beispiel 17, verwendet jedoch Colour Index Pigment Red 166 anstatt von Pigment Yellow 110 und 0,89 g anstatt von 0,55 g der Verbindung der Formel (I), wobei die Resultate ebenfalls gut sind.

## Patentansprüche

1. Verfahren zur Färbung von teilkristallinen Kunststoffen in der Masse, **dadurch gekennzeichnet, dass** ein Pigment enthaltend mindestens je eine Gruppe 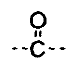 und 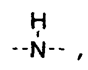 welche miteinander als 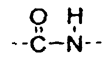 gebunden oder zusammen in Konjugation stehen, wobei es sich beim Pigment um Pigment Yellow 139, Pigment Violet 37, ein Chinacridon-, Disazokondensations-, oder Isoindolinon-pigment, oder um ein Pigment der Formel 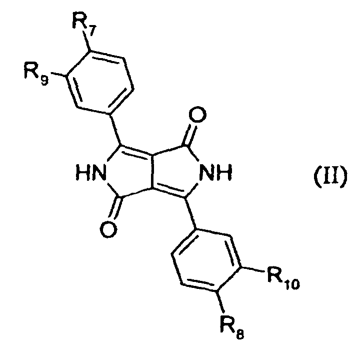 handelt, worin
R₇, R₈, R₉ und R₁₀ unabhängig voneinander für Wasserstoff, Halogen, Cyano, Carbamoyl oder C₁-C₄Alkyl stehen, und
• von 0,001 bis 0,25 Gewichtsteile, bezogen auf ein Gewichtsteil Pigment, eines Farbmittels der Formel 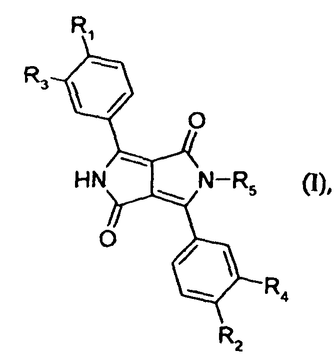 worin
R₁, R₂, R₃ und R₄ unabhängig voneinander für Wasserstoff, Halogen, R₆, OR₆ oder SR₆ stehen, R₅ Wasserstoff oder lineares oder verzweigtes C₁-C₁₂Alkyl, Benzyl oder Phenethyl ist, und R₆ eine unsubstituierte oder einfach oder mehrfach mit Halogen oder mit OC₁-C₆Alkyl substituierte apolare Gruppe ist, mit den Massgaben, dass
- wenn R₅ gleich Methyl ist, R₁, R₂, R₃ oder R₄ eine zumindest 6 C-Atome lange Alkyl- oder Alkylenkette enthalten, und
- wenn R₅ Wasserstoff ist, R₁, R₂, R₃ oder R₄ für R₆, OR₆ oder SR₆ steht und R₁, R₂, R₃ oder R₄ enthalten zwei zumindest 6 C-Atome langen Alkyl- oder Alkylenketten oder eine zumindest 12 C-Atome lange Alkyl- oder Alkylenkette,
verwendet werden.

2. Verfahren gemäss Anspruch 1, worin
• ein teilkristalliner Kunststoff,
ein Pigment enthaltend mindestens je eine Gruppe 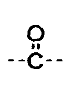 und 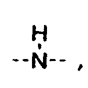 welche miteinander als 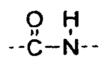 gebunden oder zusammen in Konjugation stehen, wobei es sich beim Pigment um Pigment Yellow 139, Pigment Violet 37, ein Chinacridon-, Disazokondensations-, oder Isoindolinon-pigment, oder um ein Pigment der Formel 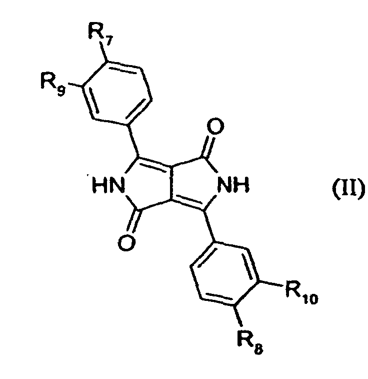 handelt, worin
• R₇, R₈, R₉ und R₁₀ unabhängig voneinander für Wasserstoff, Halogen, Cyano, Carbamoyl oder C₁-C₄Alkyl stehen, und
• von 0,001 bis 0,25 Gewichtsteile, bezogen auf ein Gewichtsteil Pigment, eines Farbmittels der Formel 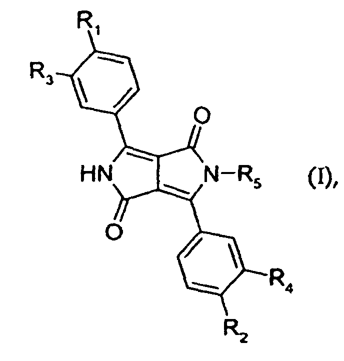 worin
R₁, R₂, R₃ und R₄ unabhängig voneinander für Wasserstoff, Halogen, R₆, OR₆ oder SR₆ stehen, R₅ Wasserstoff oder lineares oder verzweigtes C₁-C₁₂Alkyl, Benzyl oder Phenethyl ist, und R₆ eine unsubstituierte oder einfach oder mehrfach mit Halogen oder mit OC₁-C₆Alkyl substituierte apolare Gruppe ist, mit der Massgabe, dass wenn R₅ Wasserstoff ist, R₁, R₂, R₃ oder R₄ für R₆, OR₆ oder SR₆ steht,
im Spritzgussverfahren geformt werden.

3. Zusammensetzung enthaltend
ein Pigment enthaltend mindestens je eine Gruppe 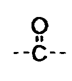 und 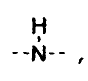 welche miteinander als 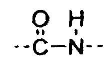 gebunden oder zusammen in Konjugation stehen, wobei es sich beim Pigment um Pigment Yellow 139, Pigment Violet 37, ein Chinacridon-, Disazokondensations-, oder Isoindolinon-pigment, oder um ein Pigment der Formel 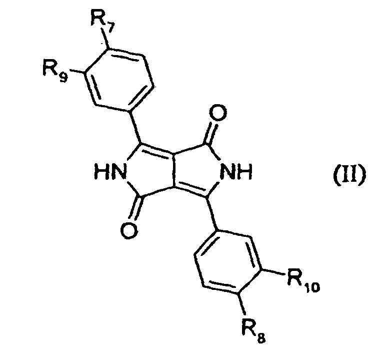 handelt, worin
• R₇, R₈, R₉ und R₁₀ unabhängig voneinander für Wasserstoff, Halogen, Cyano, Carbamoyl oder C₁-C₄Alkyl stehen, und
• von 0,001 bis 0,25 Gewichtsteile, bezogen auf ein Gewichtsteil Pigment, eines Farbmittels der Formel 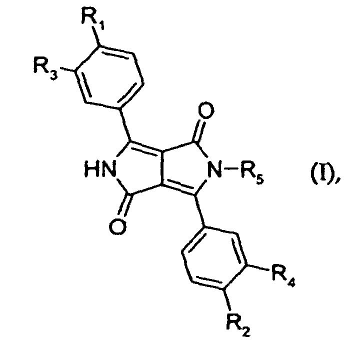 worin
R₁, R₂, R₃ und R₄ unabhängig voneinander für Wasserstoff, Halogen, R₆, OR₆ oder SR₆ stehen, R₅ Wasserstoff oder lineares oder verzweigtes C₁-C₁₂Alkyl, Benzyl oder Phenethyl ist, und R₆ eine unsubstituierte oder einfach oder mehrfach mit Halogen oder mit OC₁-C₆Alkyl substituierte apolare Gruppe ist, mit der Massgabe, dass
- wenn R₅ gleich Methyl ist, R₁, R₂, R₃ oder R₄ eine zumindest 6 C-Atome lange Alkyl- oder Alkylenkette enthalten, und
- wenn R₅ Wasserstoff ist, R₁, R₂, R₃ oder R₄ für R₆, OR₆ oder SR₆ steht und R₁, R₂, R₃ oder R₄ enthalten zwei zumindest 6 C-Atome langen Alkyl- oder Alkylenketten oder eine zumindest 12 C-Atome lange Alkyl- oder Alkylenkette.

4. Zusammensetzung gemäss Anspruch 3, wobei es sich um eine Farbmittelzusammensetzung handelt, bestehend im wesentlichen aus
einem oder mehreren Pigmenten enthaltend mindestens je eine Gruppe 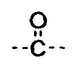 und 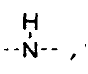 welche miteinander als 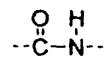 gebunden oder zusammen in Konjugation stehen, wobei es sich beim Pigment um Pigment Yellow 139, Pigment Violet 37, ein Chinacridon-, Disazokondensations-, oder Isoindolinon-pigment, oder um ein Pigment der Formel 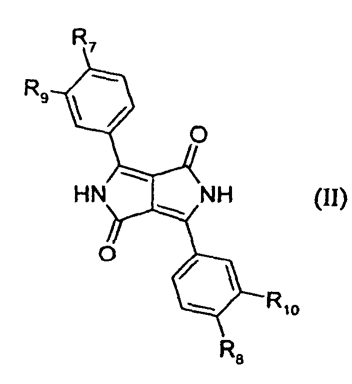 handelt, worin
• R₇, R₈, R₉ und R₁₀ unabhängig voneinander für Wasserstoff, Halogen, Cyano, Carbamoyl oder C₁-C₄Alkyl stehen,
• von 0,001 bis 0,25 Gewichtsteile, bezogen auf ein Gewichtsteil Pigment, eines oder mehrerer Farbmitteln der Formel (I), und
• gegebenenfalls einem oder mehreren Farbmitteln, ausgewählt aus der Gruppe bestehend aus anorganischen Weiss-, Schwarz- oder Buntpigmenten, weiteren organischen Buntpigmenten und Verbindungen der Formel 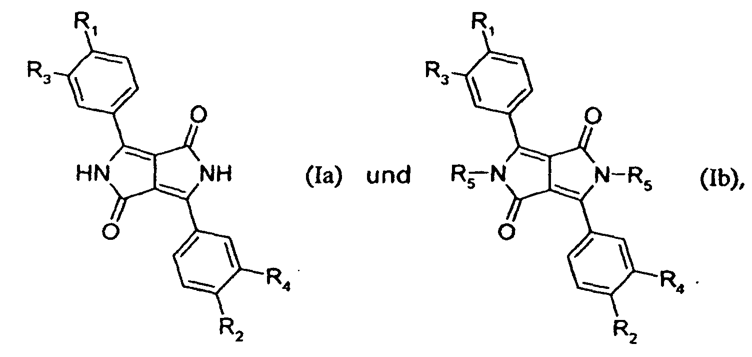
worin R₁, R₂, R₃, R₄ und R₅ die gleiche Bedeutung haben, wie in Formel (I) gemäss Anspruch 3.

5. Zusammensetzung gemäss Anspruch 3, enthaltend zusätzlich ein organisches Material, wobei das Totalgewicht der Pigmente und übrigen Farbmitteln von 0,01 bis 70 Gew.-% beträgt, bezogen auf das Gesamtgewicht von Pigmenten, übrigen Farbmitteln und organischem Material.

6. Verfahren gemäss Anspruch 1 oder Zusammensetzung gemäss Anspruch 3, worin in Formel (I) R₁ und R₂ für OR₆ oder SR₆ stehen und R₃ und R₄ gleich Wasserstoff sind, oder worin R₁ und R₂ gleich Wasserstoff sind und R₃ und R₄ für OR₆ oder SR₆ stehen.

7. Verfahren gemäss Anspruch 1 oder Zusammensetzung gemäss Anspruch 3, worin das Pigment mindestens je zwei Gruppen 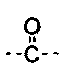 und 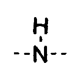 aufweist.

8. Verfahren gemäss Anspruch 1 oder Zusammensetzung gemäss Anspruch 3, worin die Menge des Farbmittels der Formel (I) von 0,01 bis 0,2 Gewichtsteile beträgt, bezogen auf ein Gewichtsteil Pigment.

9. Verfahren gemäss Anspruch 1 oder Zusammensetzung gemäss Anspruch 5, worin es sich beim teilkristallinen Kunststoff oder beim organischen Material um ein Homopolymer, ein Block- oder statistisches Copolymer oder Terpolymer von Ethylen, Propylen, Butylen, Styrol und/oder Divinylbenzol, ein Polyester, ein Polyamid oder ein thermoplastisches lonomer handelt.

10. Verbindung der Formel 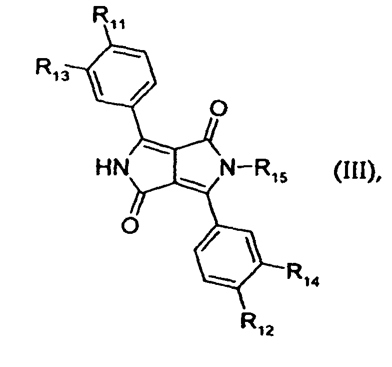 worin
R₁₁, R₁₂, R₁₃ und R₁₄ unabhängig voneinander für Wasserstoff, Halogen, R₁₆, OR₁₆ oder SR₁₆ stehen, R₁₅ lineares oder verzweigtes C₁-C₁₂Alkyl, Benzyl oder Phenethyl ist, und R₁₆ eine unsubstituierte oder mit Halogen oder mit OC₁-C₆Alkyl substituierte apolare Gruppe ist, **dadurch gekennzeichnet, dass** zumindest eins von R₁₁, R₁₂, R₁₃ oder R₁₄ für R₁₆, OR₁₆ oder SR₁₆ steht, mit den Massgaben, dass
- wenn R₁₅ gleich Methyl ist, R₁₁, R₁₂, R₁₃ oder R₁₄ eine zumindest 6 C-Atome lange Alkyl- oder Alkylenkette enthalten.

11. Verfahren oder Zusammensetzung gemäss Anspruch 7, worin es sich beim Pigment um ein Pigment der Formel 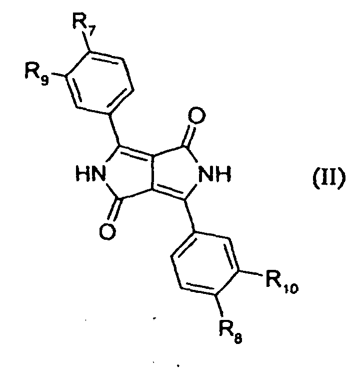 handelt, worin
R₇, R₈, R₉ und R₁₀ unabhängig voneinander für Wasserstoff, Halogen, Cyano, Carbamoyl, C₁-C₄Alkyl oder Phenyl stehen.

## Claims

1. A method of bulk-dyeing partially crystalline plastics, which comprises using a pigment containing at least one each of groups 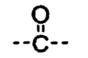 and 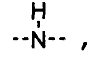 which are joined to one another as 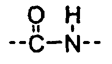 or are in conjugation with one another, the pigment being Pigment Yellow 139, Pigment Violet 37, a quinacridone pigment, disazo condensation pigment or isoindolinone pigment, or a pigment of the formula 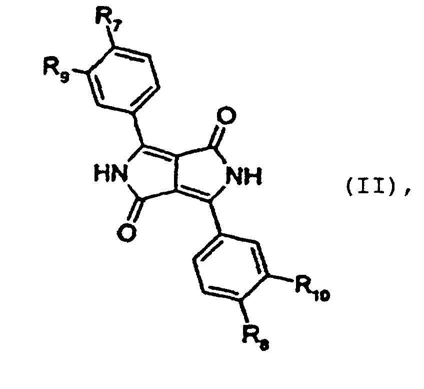 in which
R₇, R₈, R₉ and R₁₀ independently of one another are hydrogen, halogen, cyano, carbamoyl or C₁-C₄alkyl, and
• from 0.001 to 0.25 part by weight, per part by weight of pigment, of a colorant of the formula 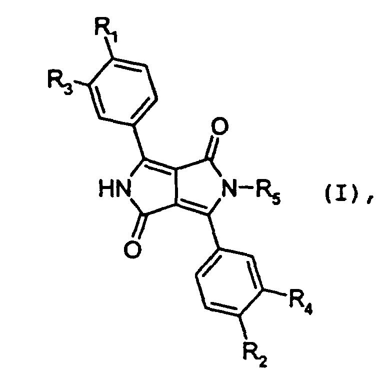 in which
R₁, R₂, R₃ and R₄ independently of one another are hydrogen, halogen, R₆, OR₆ or SR₆, R₅ is hydrogen or linear or branched C₁-C₁₂alkyl, benzyl or phenethyl, and R₆ is an apolar group which is unsubstituted or substituted one or more times by halogen or by OC₁-C₆alkyl, with the provisos that
- if R₅ is methyl, R₁, R₂, R₃ or R₄ contain an alkyl or alkylene chain at least 6 carbon atoms long, and
- if R₅ is hydrogen, R₁, R₂, R₃ or R₄ is R₆, OR₆ or SR₆ and R₁, R₂, R₃ or R₄ contain two alkyl or alkylene chains at least 6 carbon atoms long or one alkyl or alkylene chain at least 12 carbon atoms long.

2. A method according to claim 1, in which
• a partially crystalline plastic,
a pigment containing at least one each of groups 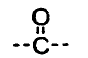 and 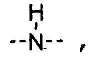 which are joined to one another as 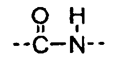 or are in conjugation with one another, the pigment being Pigment Yellow 139, Pigment Violet 37, a quinacridone pigment, disazo condensation pigment or isoindolinone pigment, or a pigment of the formula 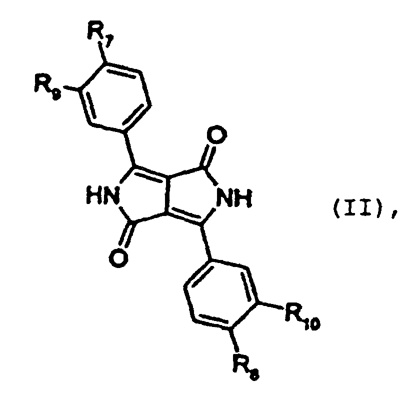
in which
• R₇, R₈, R₉ and R₁₀ independently of one another are hydrogen, halogen, cyano, carbamoyl or C₁-C₄alkyl, and
• from 0.001 to 0.25 part by weight, per part by weight of pigment, of a colorant of the formula 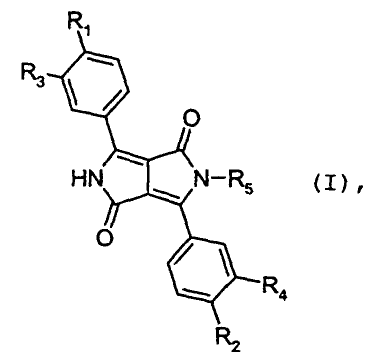 in which
R₁, R₂, R₃ and R₄ independently of one another are hydrogen, halogen, R₆, OR₆ or SR₆, R₅ is hydrogen or linear or branched C₁-C₁₂alkyl, benzyl or phenethyl, and R₆ is an apolar group which is unsubstituted or substituted one or more times by halogen or by OC₁-C₆alkyl, with the proviso that if R₅ is hydrogen, R₁, R₂, R₃ or R₄ is R₆, OR₆ or SR₆,
are injection moulded.

3. A composition comprising
a pigment containing at least one each of the groups 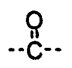 and 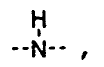 which are joined to one another as 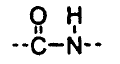 or are in conjugation with one another, the pigment being Pigment Yellow 139, Pigment Violet 37, a quinacridone pigment, disazo condensation pigment or isoindolinone pigment, or a pigment of the formula 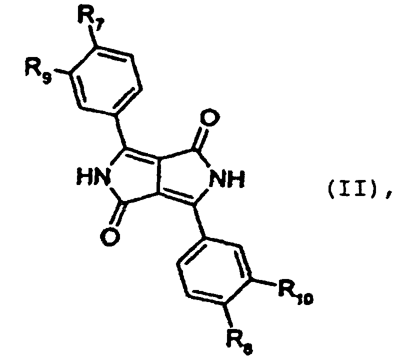 in which
• R₇, R₈, R₉ and R₁₀ independently of one another are hydrogen, halogen, cyano, carbamoyl or C₁-C₄alkyl, and
• from 0.001 to 0.25 part by weight, per part by weight of pigment, of a colorant of the formula 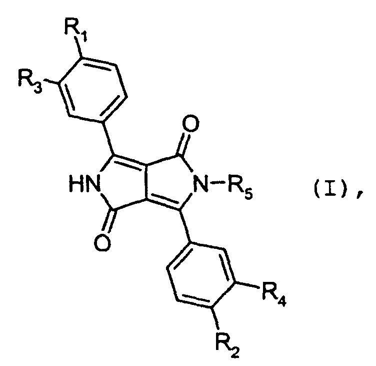 in which
R₁, R₂, R₃ and R₄ independently of one another are hydrogen, halogen, R₆, OR₆ or SR₆, R₅ is hydrogen or linear or branched C₁-C₁₂alkyl, benzyl or phenethyl, and R₆ is an apolar group which is unsubstituted or substituted one or more times by halogen or by OC₁-C₆alkyl, with the provisos that
- if R₅ is methyl, R₁, R₂, R₃ or R₄ contain an alkyl or alkylene chain at least 6 carbon atoms long, and
- if R₅ is hydrogen, R₁, R₂, R₃ or R₄ is R₆, OR₆ or SR₆ and R₁, R₂, R₃ or R₄ contain two alkyl or alkylene chains at least 6 carbon atoms long or one alkyl or alkylene chain at least 12 carbon atoms long.

4. A composition according to claim 3, which is a colorant composition consisting essentially of one or more pigments containing at least one each of groups 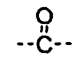 and 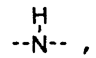 which are joined to one another as 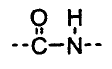 or are in conjugation with one another, the pigment being Pigment Yellow 139, Pigment Violet 37, a quinacridone pigment, disazo condensation pigment or isoindolinone pigment, or a pigment of the formula 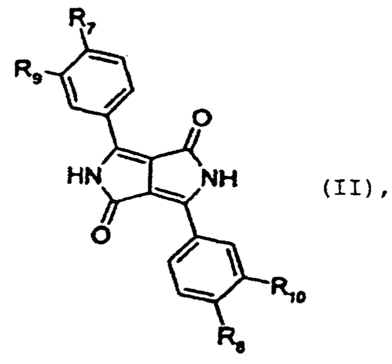 in which
• R₇, R₈, R₉ and R₁₀ independently of one another are hydrogen, halogen, cyano, carbamoyl or C₁-C₄alkyl,
• from 0.001 to 0.25 part by weight, per part by weight of pigment, of one or more colorants of the formula (I), and
• if desired, one or more colorants selected from the group consisting of inorganic white, black and colour pigments, further organic colour pigments, and compounds of the formula 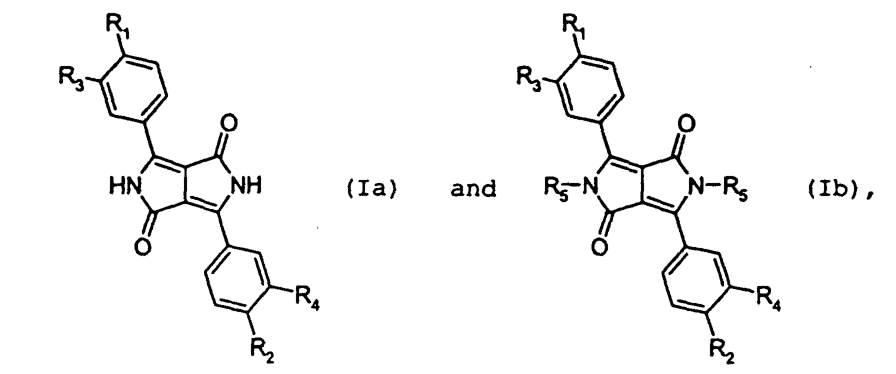
in which R₁, R₂, R₃, R₄ and R₅ have the same meaning as in formula (I) according to claim 3.

5. A composition according to claim 3, additionally comprising an organic material, the total weight of pigments and other colorants being from 0.01 to 70% by weight based on the overall weight of pigments, other colorants and organic material.

6. A method according to claim 1 or composition according to claim 3, wherein in formula (I) R₁ and R₂ are OR₆ or SR₆ and R₃ and R₄ are hydrogen, or wherein R₁ and R₂ are hydrogen and R₃ and R₄ are OR₆ or SR₆.

7. A method according to claim 1 or composition according to claim 3, wherein the pigment contains at least two each of groups 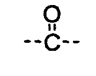 and

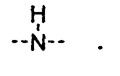

8. A method according to claim 1 or composition according to claim 3, wherein, per part by weight of pigment, the amount of the colorant of the formula (I) is from 0.01 to 0.2 part by weight.

9. A method according to claim 1 or composition according to claim 5, wherein the partially crystalline plastic or the organic material is a homopolymer or a block or random copolymer or terpolymer of ethylene, propylene, butylene, styrene and/or divinylbenzene, a polyester, a polyamide or a thermoplastic ionomer.

10. A compound of the formula 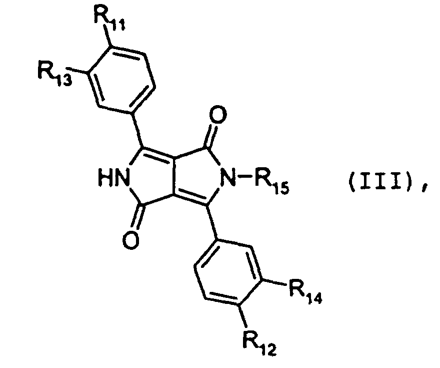 in which
R₁₁, R₁₂, R₁₃ and R₁₄ independently of one another are hydrogen, halogen, R₁₆, OR₁₆ or SR₁₆, R₁₅ is linear or branched C₁-C₁₂alkyl, benzyl or phenethyl, and R₁₆ is an apolar group which is unsubstituted or substituted by halogen or OC₁-C₆alkyl, wherein at least one of R₁₁, R₁₂, R₁₃ or R₁₄ is R₁₆, OR₁₆ or SR₁₆, with the proviso that
- if R₁₅ is methyl, then R₁₁, R₁₂, R₁₃ or R₁₄ each contain an alkyl or alkylene chain at least 6 carbons atoms in length.

11. A method or composition according to claim 7, wherein the pigment is a pigment of the formula 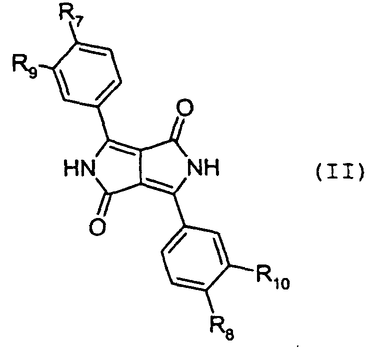 in which
R₇, R₈, R₉ and R₁₀ independently of one another are hydrogen, halogen, cyano, carbamoyl, C₁-C₄alkyl or phenyl.

## Revendications

1. Procédé pour la coloration dans la masse de matières plastiques partiellement cristallines, **caractérisé en ce que** l'on utilise un pigment contenant au moins un groupe 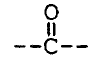 et 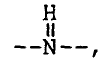 qui sont liés sous la forme 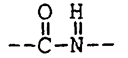 ou sont conjugués, dans lequel il s'agit pour le pigment de Pigment Yellow 139, Pigment Violet 37, d'un pigment de quinacridone, de condensation disazoïque ou d'isoindolinone, ou d'un pigment de formule 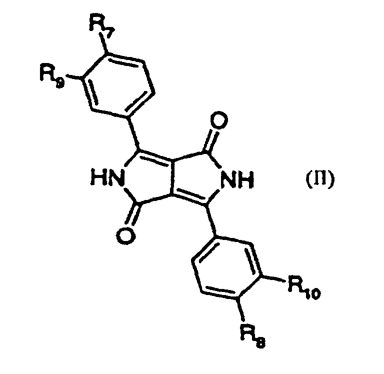 dans laquelle R₇, R₈, R₉ et R₁₀ représentent indépendamment l'un de l'autre un hydrogène, un halogène, cyano, carbamoyle ou un alkyle en C₁ à C₄, et
• de 0,001 à 0,25 partie en poids, par rapport à une partie en poids de pigment, d'un colorant de formule 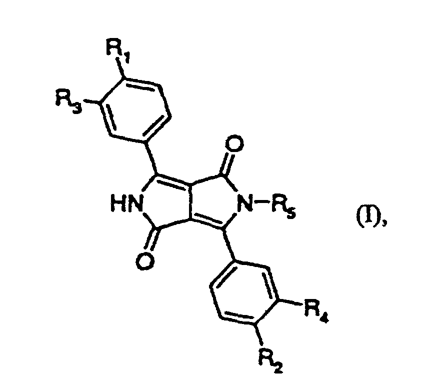 dans laquelle R₁, R₂, R₃ et R₄ représentent indépendamment l'un de l'autre un hydrogène, halogène, R₆, OR₆ ou SR₆, R₅ est un hydrogène ou un alkyle en C₁ à C₁₂ linéaire ou ramifié, benzyle ou phénéthyle, et R₆ est un groupe apolaire non substitué ou substitué une ou plusieurs fois avec un halogène ou avec O-(alkyle en C₁ à C₆), avec les conditions que
- lorsque R₅ est un méthyle, R₁, R₂, R₃ ou R₄ contienne une chaîne alkyle ou alkylène longue d'au moins 6 atomes de carbone, et
- lorsque R₅ est un hydrogène, R₁, R₂, R₃ ou R₄ représente R₆, OR₆ ou SR₆ et R₁, R₂, R₃ ou R₄ contiennent deux chaînes alkyle ou alkylène longues d'au moins 6 atomes de carbone ou une chaîne alkyle ou alkylène longue d'au moins 12 atomes de carbone.

2. Procédé selon la revendication 1, dans lequel on met en forme par le procédé de moulage par injection
• une matière plastique partiellement cristalline, un pigment contenant au moins respectivement un groupe 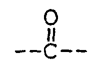 et 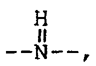 qui sont liés sous la forme 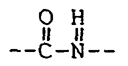
ou sont conjugués, dans lequel il s'agit pour le pigment de Pigment Yellow 139, Pigment Violet 37, d'un pigment de quinacridone, de condensation disazoïque ou d'isoindolinone, ou d'un pigment de formule 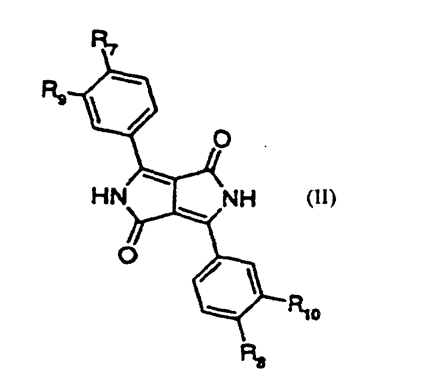 dans laquelle
• R₇, R₈, R₉ et R₁₀ représentent indépendamment l'un de l'autre un hydrogène, halogène, cyano, carbamoyle ou alkyle en C₁ à C₄, et
• de 0,001 à 0,25 partie en poids, par rapport à une partie en poids de pigment, d'un colorant de formule 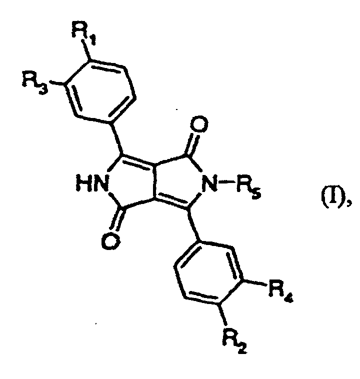 dans laquelle R₁, R₂, R₃ et R₄ représentent indépendamment l'un de l'autre un hydrogène, halogène, R₆, OR₆ ou SR₆, R₅ est un hydrogène ou un alkyle en C₁ à C₁₂ linéaire ou ramifié, benzyle ou phénéthyle, et R₆ est un groupe apolaire non substitué ou substitué une ou plusieurs fois avec un halogène ou avec O-(alkyle en C₁ à C₆), avec la condition, que lorsque R₅ est un hydrogène, R₁, R₂, R₃ ou R₄ représente R₆, OR₆ ou SR₆.

3. Composition contenant un pigment contenant au moins un groupe 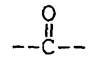 et 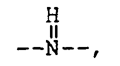 qui sont liés sous la forme 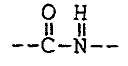 ou sont conjugués, dans laquelle il s'agit pour le pigment de Pigment Yellow 139, Pigment Violet 37, d'un pigment de quinacridone, de condensation disazoïque ou d'isoindolinone, ou d'un pigment de formule 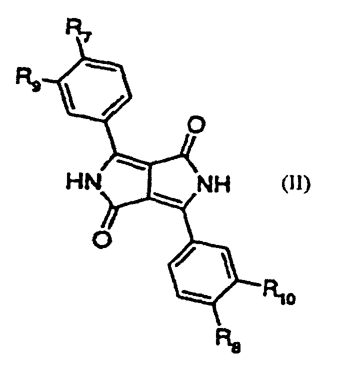 dans laquelle
• R₇, R₈, R₉ et R₁₀ représentent indépendamment l'un de l'autre un hydrogène, halogène, cyano, carbamoyle ou alkyle en C₁ à C₄, et
• de 0,001 à 0,25 partie en poids, par rapport à une partie en poids de pigment, d'un colorant de formule 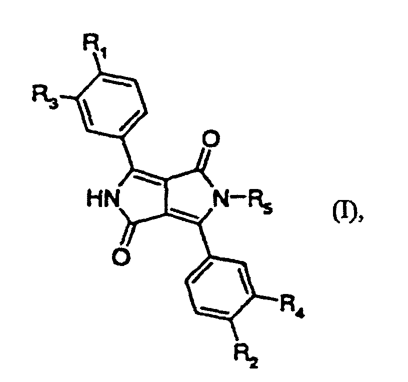 dans laquelle R₁, R₂, R₃ et R₄ représentent indépendamment l'un de l'autre un hydrogène, halogène, R₆, OR₆ ou SR₆, R₅ est un hydrogène ou alkyle en C₁ à C₁₂ linéaire ou ramifié, benzyle ou phénéthyle, et R₆ est un groupe apolaire non substitué ou substitué une ou plusieurs fois avec un halogène ou avec O-(alkyle en C₁ à C₆), avec les conditions, que
- lorsque R₅ est un méthyle, R₁, R₂, R₃ ou R₄ contient une chaîne alkyle ou alkylène longue d'au moins 6 atomes de carbone, et
- lorsque R₅ est un hydrogène, R₁, R₂, R₃ ou R₄ représente R₆, OR₆ ou SR₆ et R₁, R₂, R₃ ou R₄ contiennent deux chaînes alkyle ou alkylène longues d'au moins 6 atomes de carbone ou une chaîne alkyle ou alkylène longue d'au moins 12 atomes de carbone.

4. Composition selon la revendication 3, dans laquelle il s'agit d'une composition de colorants, constituée essentiellement de
un ou plusieurs pigments contenant au moins un groupe 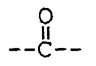 et 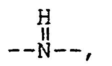 qui sont liés sous la forme 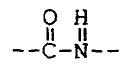 ou sont conjugués, dans laquelle il s'agit pour le pigment de Pigment Yellow 139, Pigment Violet 37, d'un pigment de quinacridone, de condensation disazoïque ou d'un isoindolinone, ou d'un pigment de formule 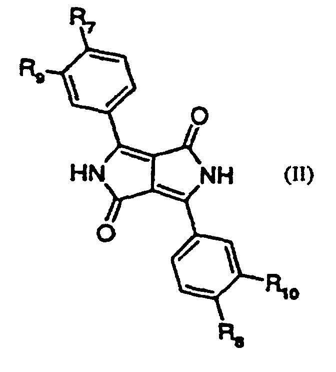 dans laquelle
• R₇, R₈, R₉ et R₁₀ représentent indépendamment l'un de l'autre un hydrogène, halogène, cyano, carbamoyle ou alkyle en C₁ à C₄,
• de 0,001 à 0,25 partie en poids, par rapport à une partie en poids de pigment, d'un ou de plusieurs colorants de formule (I) et
• éventuellement d'un ou plusieurs colorants, choisis dans le groupe constitué des colorants blancs, noirs ou colorés,. d'autres pigments colorés organiques et de composés de formule 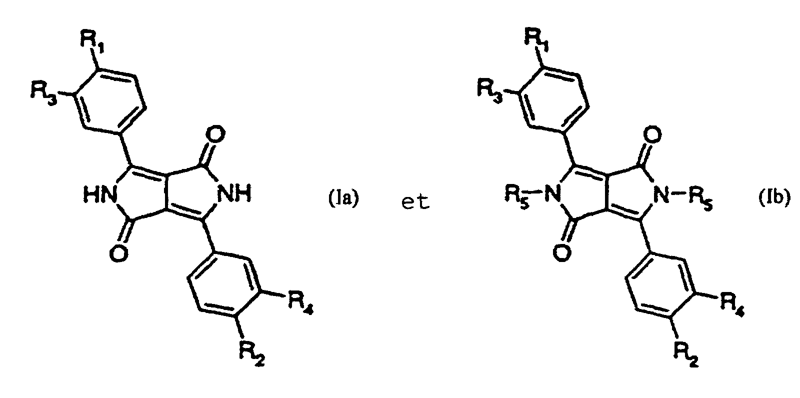
dans lesquelles R₁, R₂, R₃, R₄ et R₅ ont la même signification que dans la formule (I) selon la revendication 3.

5. Composition selon la revendication 3, contenant de plus un matériau organique, dans laquelle le poids total des pigments et des colorants usuels s'élève de 0,01 à 70 % en poids, par rapport au poids total des pigments, des colorants usuels et des matériaux organiques.

6. Procédé selon la revendication 1 ou composition selon la revendication 3, dans lequel dans la formule (I), R₁ et R₂ représentent OR₆ ou SR₆ et R₃ et R₄ sont un hydrogène, ou dans lequel R₁ et R₂ sont un hydrogène et R₃ et R₄ représentent OR₆ ou SR₆.

7. Procédé selon la revendication 1 ou composition selon la revendication 3, dans lequel le pigment présente au moins deux groupes 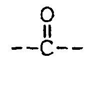 et

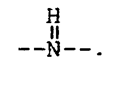

8. Procédé selon la revendication 1 ou composition selon la revendication 3, dans lequel la quantité du colorant de formule (I) s'élève de 0,01 à 0,2 partie en poids, par rapport à une partie en poids de pigment.

9. Procédé selon la revendication 1 ou composition selon la revendication 5, dans lequel il s'agit pour la matière plastique partiellement cristalline ou pour le matériau organique d'un homopolymère, d'un copolymère séquencé ou statistique ou d'un terpolymère d'éthylène, de propylène, de butylène, de styrène et/ou de divinylbenzène, d'un polyester, d'un polyamide ou d'un ionomère thermoplastique.

10. Composé de formule 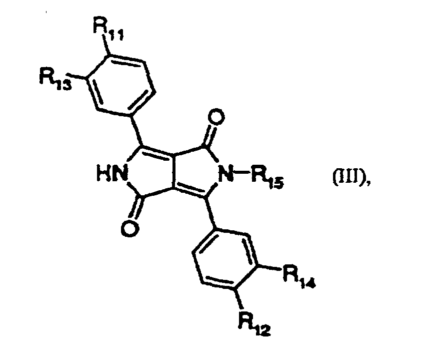 dans laquelle R₁₁, R₁₂, R₁₃ et R₁₄ représentent indépendamment l'un de l'autre un hydrogène, un halogène, R₁₆, OR₁₆ ou SR₁₆, R₁₅ représente un alkyle en C₁ à C₁₂ linéaire ou ramifié, benzyle ou phénéthyle, et R₁₆ est un groupe apolaire non substitué ou substitué par un halogène ou O-(alkyle en C₁ à C₆), **caractérisé en ce qu'**au moins l'un de R₁₁, R₁₂, R₁₃ ou R₁₄ représente R₁₆, OR₁₆ ou SR₁₆, avec les conditions que
- lorsque R₁₅ est un méthyle, R₁₁, R₁₂, R₁₃ ou R₁₄ contient une chaîne alkyle ou alkylène longue d'au moins 6 atomes de carbone.

11. Procédé ou composition selon la revendication 7, dans lequel il s'agit pour le pigment d'un pigment de formule 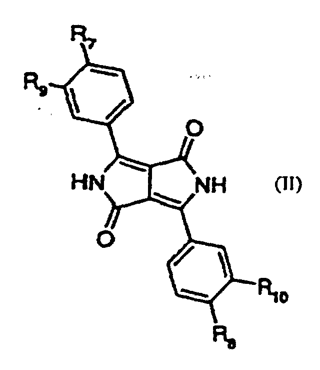 dans laquelle R₇, R₈, R₉ et R₁₀ représentent indépendamment l'un de l'autre, un hydrogène, halogène, cyano, carbamoyle, alkyle en C₁ à C₄ ou phényle.
